# EUROPEAN PATENT SPECIFICATION

(11) **EP 3 732 895 B1**
(45) Date of publication and mention of the grant of the patent: **11.09.2024**
(21) Application number: 18847177.5
(22) Date of filing: 28.12.2018
(51) Int. Cl.: H04R 1/10, A45C 11/00

(54) **HEARING DEVICE CASE INCLUDING CHARGER**
HÖRGERÄTEGEHÄUSE MIT LADEGERÄT
BOÎTIER POUR DISPOSITIF AUDITIF COMPRENANT UN CHARGEUR

(30) Priority: 28.12.2017 US 201762611355 P
(43) Date of publication of application: 04.11.2020
(73) Proprietor: Starkey Laboratories, Inc., Eden Prairie, MN 55344 (US); Higgins, Sidney A., Maple Grove MN 55369 (US); Tourtelotte, David, Eden Prairie MN 55347 (US)
(72) Inventor: HIGGINS, Sidney, A,, Maple Grove, MN 55369 (US); TOURTELOTTE, David, Eden Praireie, MN 55347 (US)
(74) Representative: Dentons UK and Middle East LLP
(86) International application number: PCT/US2018/067959
(87) International publication number: WO 2019/133876

(56) References cited:
- US-A1- 2013 105 342
- US-A1- 2017 195 760
- US-B2- 9 756 432

## Description

### FIELD OF THE DISCLOSURE

Embodiments of the present disclosure relate generally to storage cases for storing and charging hearing devices contained therein.

### BACKGROUND

Hearing devices (e.g., including hearing aids or devices for providing personalized sound to an individual's ear) may be worn, for example, in and/or around an individual's ear and may be contoured with curved surfaces to facilitate comfort in use. For example, hearing aids may be used to assist an individual suffering from hearing loss by transmitting amplified sound directly to the individual's ear canals. Many hearing devices are portably powered with a battery and some hearing devices may include rechargeable batteries that may be, for example, recharged in a specific charging station. The hearing devices may be designed and powered for, e.g., all day use and then nightly recharged. However, some individuals may choose to only wear the hearing devices when the need is present (e.g., only for a few hours in the day) and store the hearing devices (e.g., in pockets or bags) when not in use. Cables and tubes of the hearing devices may be damaged when transported or stored without protection (e.g., when loose in pockets or bags). Further, hearing devices that are infrequently used may miss regular overnight charging and, therefore, may have depleted or limited power remaining in the batteries when needed.

Various hearing devices cases may include conductive metal plates or pins that make contact with metal plates or pins on the hearing device for charging. The case may require the hearing device to be positioned within or "dropped in" a "blind" pocket to ensure precise seating for proper charging. The "blind" pockets may limit the ability of the user to ensure proper positioning and may be difficult to determine if any debris or foreign items are located within the pocket (e.g., preventing the hearing device from charging properly). Alternatively, the case may be a large bedside unit that may be impractical for transportation (e.g., due to increased size, lack of battery, etc.).

US2013/105342 discloses a compact and extremely slim case for securely holding a pair of compact earphones, their cables, and the audio plug.

US2017/195760 disclose an earbuds carrying case hingeably openable and closable in exerting a downward force to hold the earbuds in position and its wound cable connections in place.

US9756432 discloses a container for storage of hearing aids.

### SUMMARY

The invention is set out in the appended set of claims.

Embodiments described herein provide a hearing device case that includes two body portions that are movable relative to one another between an open position and a closed position, and a corresponding hearing device is received by one of the two body portions. The case includes , a first body portion comprising an inner surface and a second body portion movably connected to the first body portion. The inner surface of the first body portion defines J Z a first cavity extending into the first body portion to receive a first hearing device. The second body portion includes an inner surface that defines a second cavity extending into the second body portion to receive a second hearing device.

In one or more embodiments, the case may further include one or more hinges operably coupling the first and second body portions such that the first and second body portions move relative to one another. In one or more embodiments, the case may further include a battery disposed in one of the first and second body portions and electronics disposed in the other of the first and second body portions. In one or more embodiments, the case may further include indicator lights (for, e.g., hearing device, battery, etc.) positioned on one or both of the first and second body portions.

In one or more embodiments, each of the first and second body portions may include an outer surface opposing the inner surface, wherein the outer surface of each of the first and second body portions may define an opening extending through the outer surface to the first and second cavity, respectively. In one or more embodiments, first body portion may include a charging contact located within the first cavity and the second body portion may include a charging contact located within the second cavity. In one or more embodiments, one of the first and second body portion comprises an interface port adapted to receive a connector. In one or more embodiments, the case may further include a solar element located on one or both of the first and second body portions. In one or more embodiments, the case may further include an inductive charging element located on one or both of the first and second body portions.

Another exemplary case that is configurable in an open position and a closed position may include a first body portion, electronics, a second body portion movably connected to the first body portion, a battery, and one or more hinges. The first body portion may include an inner surface that defines a first cavity extending into the first body portion. The electronics may be disposed within the first body portion. The second body portion may include an inner surface that defines a second cavity extending into the second body portion. The battery may be disposed within the second body portion. The one or more hinges may operably couple the first and second body portions such that the first and second body portions move relative to one another between the open position and the closed position. The one or more hinges may include a biasing element configured to bias the case in the open position and the closed position.

In one or more embodiments, the biasing element may include a first magnet portion positioned in the one or more hinges of the first body portion and a second magnet portion positioned in the one or more hinges of the second body portion. The first and second magnet portions may be configured to be in equilibrium with one another only when positioned at 0 degrees and 180 degrees relative to one another. In one or more embodiments, the one or more hinges may define a first opening proximate the first body portion and a second opening proximate the second body portion. The case may further include a wire extending between the first and second body portions through the first and second openings of the one or more hinges.

In one or more embodiments, the one or more hinges may include one or more contact points that align when the case is in the closed position, and wherein the one or more contact points break alignment when the case is in the open position. In one or more embodiments, the case may include a battery disposed in one of the first and second body portions and electronics disposed in the other of the first and second body portions. In one or more embodiments, the case may include a latching apparatus (e.g., magnetic clasp) adapted to couple the first body portion and the second body portion. In one or more embodiments, the case may further include indicator lights (for, e.g., hearing device, battery, etc.) positioned on one or both of the first and second body portions. In one or more embodiments, each of the first and second body portions may include an outer surface opposing the inner surface, wherein the outer surface of each of the first and second body portions may define an opening extending through the outer surface to the first and second cavity, respectively.

In one or more embodiments, the first body portion may include a charging contact located within the first cavity and the second body portion may include a charging contact located within the second cavity, wherein the charging contact of the first body portion may interact with a first hearing device when received by the first cavity and the charging contact of the second body portion may interact with a second hearing device when received by the second cavity. In one or more embodiments, one of the first and second body portion may include an interface port adapted to receive a connector. In one or more embodiments, the case may further include a solar element located on one or both of the first and second body portions. In one or more embodiments, the case may further include an inductive charging element located on one or both of the first and second body portions. In one or more embodiments, the inner surface of the first body portion may face and may be parallel with the inner surface of the second body portion when the case is in the closed position. In one or more embodiments, the first cavity may be offset from or nested with the second cavity when the case is in the closed position.

An exemplary system may include a case, a first hearing device, and a second hearing device. The case includes a first body portion and a second body portion movably connected to the first body portion. The first body portion includes an inner surface that defines a first cavity extending into the first body portion and the second body portion includes an inner surface that defines a second cavity extending into the second body portion. The first hearing device may be received by the first cavity of the first body portion and the second hearing device may be received by the second cavity of the second body portion.

In one or more embodiments, the system may further include one or more hinges operably coupling the first and second body portions such that the first and second body portions move relative to one another. In one or more embodiments, the system may further include a battery disposed in one of the first and second body portions and electronics disposed in the other of the first and second body portions. In one or more embodiments, each of the first and second body portions may include an outer surface opposing the inner surface, wherein the outer surface of each of the first and second body portions may define an opening extending through the outer surface to the first and second cavity, respectively, such that the first hearing device is visible through the opening of the first body portion and the second hearing device is visible through the opening of the second body portion. The first hearing device is completely contained within the first body portion when received by the first body portion and the second hearing device is completely contained within the second body portion when received by the second body portion.

In one or more embodiments, the system may further include a latching apparatus (e.g., magnetic clasp) adapted to couple the first body portion and the second body portion. In one or more embodiments, the system may further include indicator lights (for, e.g., hearing device, battery, etc.) positioned on one or both of the first and second body portions. In one or more embodiments, the first body portion may include a charging contact located within the first cavity and the second body portion may include a charging contact located within the second cavity, wherein the charging contact of the first body portion may interact with the first hearing device when received by the first cavity and the charging contact of the second body portion may interact with the second hearing device when received by the second cavity. In one or more embodiments, one of the first and second body portion may include an interface port adapted to receive a connector. In one or more embodiments, the system may further include a solar element located on one or both of the first and second body portions. In one or more embodiments, the system may further include an inductive charging element located on one or both of the first and second body portions.

The above summary is not intended to describe each embodiment or every implementation. Rather, a more complete understanding of illustrative embodiments will become apparent and appreciated by reference to the following Detailed Description of Exemplary Embodiments and Claims in view of the accompanying figures of the drawing.

### BRIEF DESCRIPTION OF THE VIEWS OF THE DRAWING

Exemplary embodiments will be further described with reference to the figures of the drawing, wherein:
FIG. 1A is a front perspective view of an illustrative hearing device case in a closed position and in accordance with embodiments of the present disclosure;
FIG. 1B is a rear perspective view of the hearing device case of FIG. 1A;
FIG. 2A is a perspective view of the hearing device case of FIG. 1A in an open position;
FIG. 2B is another perspective view of the hearing device of FIG. 2A;
FIG. 2C is a cross-sectional view of a cavity of an exemplary hearing device case and a hearing device contained therein;
FIG. 3A is a cross-sectional view of the hearing device case of FIG. 1A taken along line 3-3' of FIG. 1A;
FIG. 3B is an enlarged view of the cross-sectional view of FIG. 3A;
FIG. 4 is a cross-sectional view of the hearing device case of FIG. 2B taken along line 4-4' of FIG. 2B;
FIG. 5 is an exploded view of first and second body portions of the hearing device case of FIG. 1A; and
FIG. 6 is a cross-sectional view of one or more hinges of an exemplary hearing device.

The figures are rendered primarily for clarity and, as a result, are not necessarily drawn to scale. Moreover, various structure/components, including but not limited to fasteners, electrical components (batteries, circuit boards, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way. Still further, "Figure x" and "FIG. x" may be used interchangeably herein to refer to the figure numbered "x."

### DETAILED DESCRIPTION OF EXEMPLARY EMBODIMENTS

In the following detailed description of illustrative embodiments, reference is made to the accompanying figures of the drawing, which form a part hereof. It is to be understood that other embodiments, which may not be described and/or illustrated herein, are certainly contemplated. Unless otherwise indicated, all numbers expressing quantities, and all terms expressing direction/orientation (e.g., vertical, horizontal, parallel, perpendicular, etc.) in the specification and claims are to be understood as being modified in all instances by the term "about."

It is noted that the term "comprises" (and variations thereof) does not have a limiting meaning where this term appears in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are used as references to help describe portions of the device relative to one another. These terms are used only to simplify the description, however, and not to limit the interpretation of any embodiment described.

Generally speaking, embodiments of the present disclosure may be directed to hearing device cases for storing and charging hearing devices contained therein. The hearing device case is configured to move between an open position and a closed position such that the case is, e.g., foldable, pocketable, and transportable. The size of the case may be minimized and the design may be optimized to, e.g., encourage an individual to carry the case such that the hearing devices contained therein are ready to be used (e.g., protected and charged). Further, due to the size and ease of use, the case may be operated (e.g., opened and closed) using only one hand. The hearing device case includes a first body portion adapted or configured to receive a first hearing device and a second body portion adapted or configured to receive a second hearing device. The first and second body portions are movably coupled to one another such that the opposing body portion covers or retains the hearing device located in the corresponding body portion (i.e., the first body portion covers/retains/protects the second hearing device and the second body portion covers/retains/protects the first hearing device). By positioning one hearing device in each body portion (e.g., separate from the other hearing device), the size of the case may be optimized for the hearing devices due to a balancing of the contents of the body portions, and the hearing devices may be prevented from tangling. For example, the overlapping cavity layout may create a tangle free, intuitive, compact charging system with a minimal number of parts. Further, a pass-through opening in the case may assist in removal of the devices stored therein and provide a visual indication regarding the presence of the devices within the case.

The hearing device case may further include a battery and electronics to charge the hearing devices when contained within the case. For example, the case may be configured or adapted such that the hearing devices contained within the case are charging when the case is in a closed position (and, e.g., not charging when the case is in the open position). Specifically, the case may include one or more contact points that interact with one another when the case is in the closed position to charge the hearing devices. As such, a user knows that the hearing devices contained within the case are charging when the case is in a closed position. In one or more embodiments, the case may also be configured or adapted such that the hearing devices contained within the case may charge when the case is in the open position.

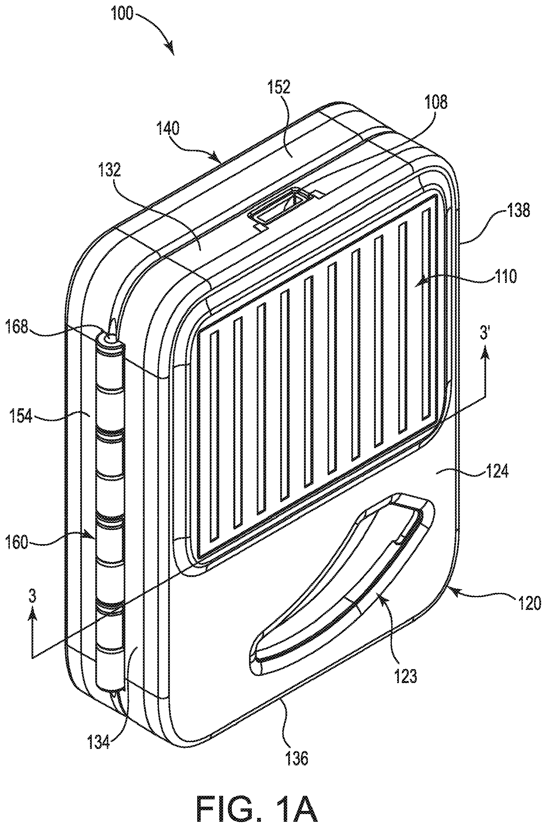

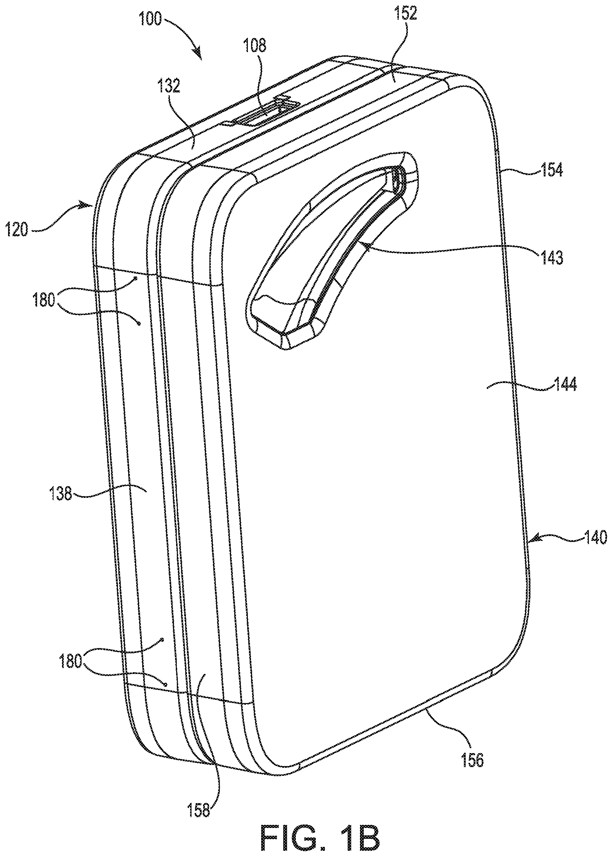

With reference to the figures of the drawing, wherein like reference numerals designate like parts and assemblies throughout the several views, FIGS. 1A and 1B illustrate a hearing device case 100 in accordance with exemplary embodiments of the present disclosure. The case 100 includes a first body portion 120 and a second body portion 140 movably connected to the first body portion 120. The case 100 illustrated in FIGS. 1A and 1B is in a closed position such that the first body portion 120 is proximate or covering the second body portion 140, and vice versa.

The first body portion 120 and the second body portion 140 are movably coupled in any suitable way. For example, as shown in FIGS. 1A and 1B, the case 100 includes one or more hinges 160 operably coupled between the first and second body portions 120, 140. Specifically, a first portion of the one or more hinges 160 may be coupled to the first body portion 120 and a second portion of the one or more hinges 160 may be coupled to the second body portion 140 with a hinge pin 168 extending therethrough. As such, the first body portion 120 and the second body portion 140 may rotate about the hinge pin 168 to move relative to one another. In one or more embodiments, the one or more hinges 160 may include a biasing element such that the case 100 is biased into the open position and/or closed position in the absence of a latching force coupling the first body portion 120 and the second body portion 140.

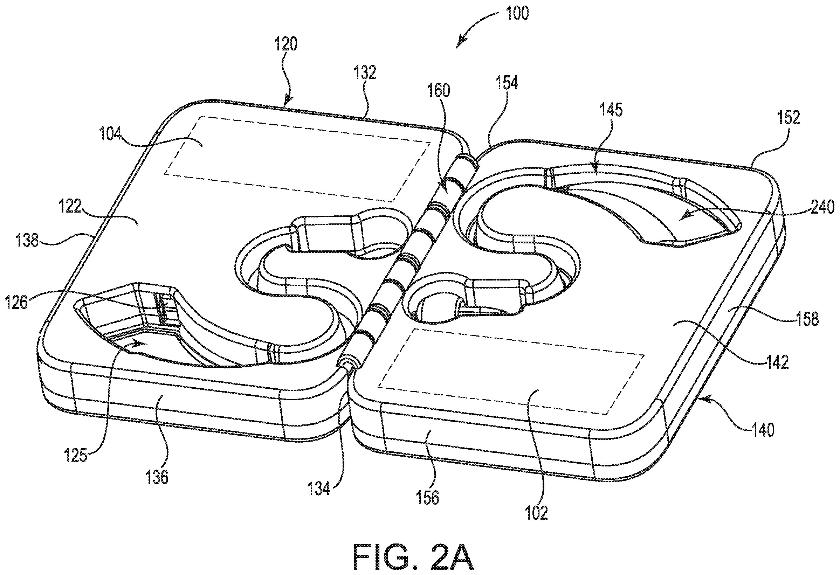

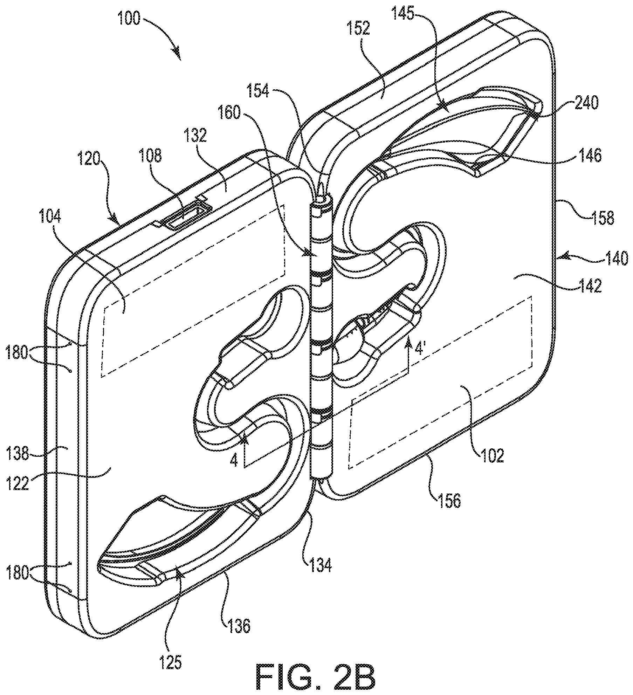

As shown in FIGS. 2A and 2B, the first and second body portions 120, 140 may move relative to one another (e.g., about the hinge pin 168) such that the case 100 is in the open position. Each of the first and second body portions 120, 140 may include an inner surface 122, 142. The inner surfaces 122, 142 may define a generally planar shape. The inner surfaces 122, 142 of the first and second body portions 120, 140, respectively, may face each other (and, e.g., may abut one another) when the case 100 is in the closed position (e.g., as shown in FIGS. 1A and 1B). Additionally, the inner surfaces 122, 142 may be parallel with one another when the case 100 is in the closed position. In one or more embodiments, the case 100 may include one or more mirrors positioned on one or both of the inner surfaces 122, 142 such that the one or more mirrors are usable when the case 100 is in the open position (e.g., the user may use the mirror to assist in donning the hearing devices). The inner surface 122 of the first body portion 120 may define a first cavity 125 extending into the first body portion 120 to receive a first hearing device (not shown). The inner surface 142 of the second body portion 140 may define a second cavity 145 extending into the second body portion 140 to receive a second hearing device 240. It is noted that the first hearing device is not illustrated herein, but may be identical to the second hearing device.

When the case 100 is in the open position, hearing devices may be positioned within each of the first and second body portions 120, 140 (e.g., within the first and second cavities 125, 145, respectively). The hearing devices may include any type of hearing device as known by one of skill in the art. Further, the first and second cavities 125, 145 may be any suitable size and/or shape to receive any type of hearing device. In one or more embodiments, the case 100 may include an adapter to modify the cavities 125, 145 to receive a different sized hearing device. By positioning the hearing devices within the cavities 125, 145, the hearing devices may be protected from being damaged due to, e.g., bending, twisting, or other cable failure.

When the hearing device is received by the corresponding cavity 125, 145, the hearing device is contained within the corresponding body portion 120, 140 such that the hearing device does not protrude beyond the inner surfaces 122, 142 of the first and second body portions 120, 140. Further, the cavities 125, 145 may be offset from one another such that when the case 100 is in the closed position, the cavities 125, 145 (and the hearing devices contained therein) minimally overlap one another or "nest" relative to one another. In one or more embodiments, the hearing devices may be removed from the cavities 125, 145 by pushing on an end portion of the hearing device (e.g., of the ear piece) such that the other end of the hearing device "tips or pops up" from the corresponding cavity 125, 145 such that the user can take out the hearing device.

In one or more embodiments, the first body portion 120 may include a charging contact 126 located within the first cavity 125 and the second body portion 140 may include a charging contact 146 located within the second cavity 145. The first and second charging contacts 126, 146 may be configured to interact with the hearing device positioned within the cavity 125, 145 to charge the hearing device. The charging contacts 126, 146 may include a biasing element (e.g., a spring) that aids in retaining the hearing device within the cavity 125, 145 (e.g., by applying a force to the hearing devices against the cavities 125, 145). Further, the shape of the cavities 125, 145 may automatically position the hearing device correctly within the cavities 125, 145 such that the hearing device is aligned with the charging contacts 126, 146. As a result, if the case 100 is moved to the closed position, the hearing devices will be correctly positioned to charge. Also, no additional latches may be needed to retain the hearing devices within the cavities 125, 145.

For example, in some embodiments, the biasing elements of the charging contacts 126, 146 may include magnets to align the charging contacts 126, 146 to the hearing device. For example, the magnets of the biasing elements may create a tactile sensation such that the hearing device "snaps" into place and makes contact with the charging contacts 126, 146 (e.g., without additional manipulation of the device by the user). Specifically, the corresponding magnets of the hearing device may be added in a planar fashion (e.g., instead of linear) as it relates to the axis of the magnet. Therefore, the sensation resulting from connecting the hearing device within the cavity (e.g., connecting the charging contacts 126, 146 to the hearing device) may provide a feeling of the hearing device "jumping" into place.

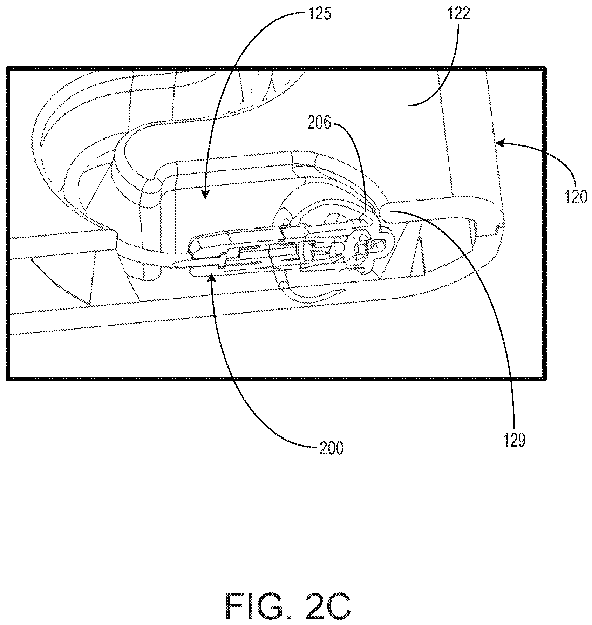

In one or more embodiments, one or both of the first and second body portions 120, 140 may include a retaining ledge 129 within the corresponding cavity 125, 145 to, e.g., assist in retaining or keeping the hearing device 200 within the cavity. For example, as shown in FIG. 2C, the retaining ledge 129 may provide an extension of the inner surface 122 such that the cavity 125 extends beneath the retaining ledge 129. Further, when the hearing device 200 is positioned in the cavity 125, an ear interface 206 of the hearing device may be restricted from movement due to the retaining ledge 129 (e.g., the retaining ledge 129 may retain the hearing device 200 in the nest of the cavity). Additionally, because the hearing device may be restrained proximate the side opposite the ear interface 206 (e.g., due to magnets proximate the charging pins), any temporary deformity of the cable of the hearing device (e.g., due to continual wear by the user) may be removed and "straightened out" by the cavity 125 such that the hearing device 200 may return to its desired flat shape. In other words, the retaining ledge 129 may configure the hearing device 200 in a position that is consistent with a relaxed state of the hearing device 200.

Further, each of the first and second body portions 120, 140 may include an outer surface 124, 144 opposing the inner surface 122, 142, respectively. A distance between the inner surfaces 122, 142 and the corresponding outer surfaces 124, 144 defines the depth of each of the first and second body portions 120, 140, respectively. The depth of each of the first and second body portions 120, 140 may be larger than the width of the hearing device contained within the first or second body portion 120, 140. In other words, each of the first and second body portions 120, 140 may be deep enough such that the hearing devices may be contained therein without protruding past the inner surface 122, 142. In some embodiments, the first and second body portions 120, 140 may define separate depths; however, as shown, the depths of the first and second body portions 120, 140 are equal. Specifically, the depths of the first and second body portions 120, 140 (e.g., measured between the inner surfaces 122, 142 and the outer surfaces 124, 144) are about greater than or equal to 0.1 inches and/or less than or equal to 1.5 inches.

As shown in FIGS. 1A and 1B, the outer surfaces 124, 144 of each of the first and second body portions 120, 140 may define an opening 123, 143 extending through the outers surfaces 124, 144 to the first and second cavities 125, 145, respectively. The openings 123, 143 are sized such that the hearing devices cannot pass through. In other words, the hearing devices cannot "fall out" of the case 100 through the openings 123, 143. Further, the openings 123, 143 provide a passageway through the outer surfaces 124, 144 such that debris may not become lodged within the cavities 125, 145 and, thereby, may reduce the need for user cleaning and maintenance of the cavities 125, 145. Further yet, the hearing devices may be visible to a user (e.g., visual confirmation) upon inspection of an exterior of the case 100 when in the closed position, thereby assuring the user that the hearing devices are positioned within the case 100 without having to open the case 100. Additionally, the openings 123, 143 may provide the user a way to push the hearing devices out of the cavities 125, 145 through the openings 123, 143 instead of pulling the hearing devices from proximate the inner surfaces 122, 142.

The first body portion 120 may define a top side 132, a hinge side 134, a bottom side 136, and a latch side 138. Similarly, the second body portion 140 may define a top side 152, a hinge side 154, a bottom side 156, and a latch side 158. It is noted that FIGS. 2A and 2B illustrate the top sides 132, 152, the hinge sides 134, 154, the bottom sides 136, 156, and the latch sides 138, 158 extending between the inner surfaces 122, 142 and the outer surfaces 124, 144, respectively. In some embodiments, the outer surfaces 124, 144 may be contoured to intersect the inner surfaces 122, 142 such that the top sides 132, 152, the hinge sides 134, 154, the bottom sides 136, 156, and the latch sides 138, 158 are effectively part of the outer surfaces 124, 144.

As shown in FIG. 1A, the one or more hinges 160 may be coupled to each of the first and second body portions 120, 140 at the hinge sides 134, 154. On the latch sides 138, 158, the case may include a latch apparatus (not shown) for restricting the case 100 in the closed position. The latch apparatus may include any suitable components for restricting movement of the first body portion 120 relative to the second body portion 140 to, e.g., maintain the case 100 in the closed position. For example, the latch apparatus may include a magnetic clasp/closure, a fastener, a mechanical clasp, a clasping element, a caring element, a spring latch, a toggle latch, a cam lock, a slam latch, etc. The latch apparatus may be positioned on one or both of the first and second body portions 120, 140 and may be adapted or configured to couple the first body portion 120 and the second body portion 140.

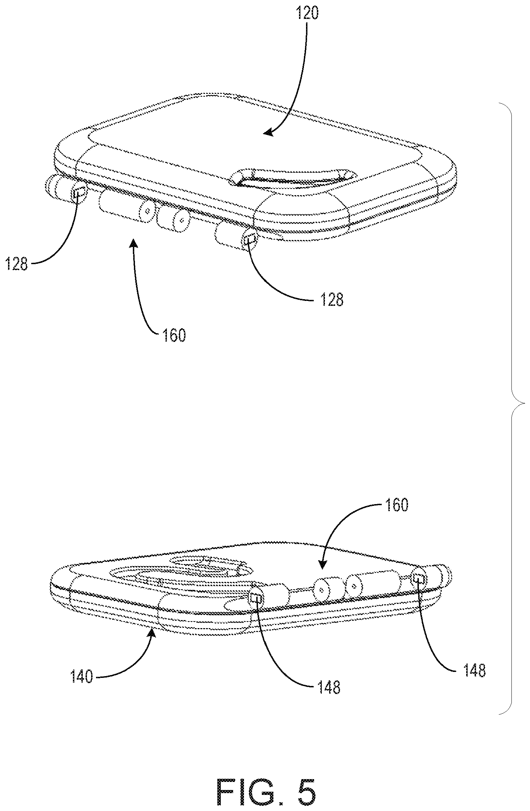

As described herein, the one or more hinges 160 may include a biasing element such that the case 100 is biased into the open position and/or closed position. For example, opposing magnets may be positioned within the one or more hinges 160 to provide a tactile feedback to the user when opening and closing the case 100. Specifically, a first magnet portion 128 may be positioned in the one or more hinges 160 of the first body portion 120 (e.g., within the one or more hinges 160 proximate the hinge side 134) and a second magnet portion 148 may be positioned in the one or more hinges 160 of the second body portion 140 (e.g., within the one or more hinges 160 proximate the hinge side 154), as shown in FIG. 5. When the first and second body portions 120, 140 are attached at the one or more hinges, the first and second magnet portions 128, 148 may align. The case 100 may include any number of corresponding magnets to form the first and second magnet portions 128, 148 (e.g., one magnet, two magnets, three magnets, four magnets, etc.). For example, as shown in FIG. 5, each of the first and second magnet portions 128, 148 includes two magnets.

The first magnet portion 128 and the second magnet portion 148 interact such that the first and second magnet portions 128, 148 resist opening of the case 100 when moving from 0 degrees (e.g., the closed position) to about 90 degrees (e.g., a 90-degree angle between the first and second body portions 120, 140). Further, the first and second magnet portions 128, 148 interact to assist in opening the case 100 when moving past 90 degrees. Therefore, when the case 100 is in the closed position, the case 100 may resist opening until the halfway point (e.g., 90-degree angle between the first and second body portions 120, 140) and may assist in opening past the halfway point. Similarly, the case 100 may assist in closing when moving from the halfway point to the closed position. As a result, the first and second magnet portions 128, 148 may create a tactile feedback that both assists with opening and closing the case 100.

Specifically, the first and second magnet portions 128, 148 may be opposing rectangular magnets (e.g., height different than length). When the first and second magnet portions 128, 148 are in an original or equilibrium state (e.g., when the case 100 is in the closed position), the first and second magnet portions 128, 148 are attracted to one another. When the first and second magnet portions 128, 148 are initially rotated relative to one another (e.g., just beyond 0 degrees or the equilibrium state), the first and second magnet portions 128, 148 resist movement or twisting (e.g., providing a "torque"). Further, the first and second magnet portions 128, 148 resist movement relative to one another when rotated from 0 degrees to 90 degrees. Thereafter, when the first and second magnet portions 128, 148 are rotated from 90 degrees to 180 degrees, the first and second magnet portions 128, 148 provide an attractive rotation. As such, the first and second magnet portions 128, 148 are configured to be in equilibrium with one another (e.g., in an attractive state) only when positioned at 0 degrees and 180 degrees relative to one another.

In other words, the first and second magnet portions 128, 148 may be biased to be positioned in an attractive or equilibrium state such that the first and second magnet portions 128, 148 are at 0 degrees (e.g., a closed position of the case 100) or 180 degrees (e.g., a fully open position of the case 100). Further, when the case 100 is in any position between the closed position and the fully open position, the first and second magnet portions 128, 148 bias the case 100 towards the closed position or the fully open position. Therefore, the user may need to overcome the biasing force of the first and second magnet portions 128, 148 to initially open the case (e.g., from a closed position) or initially close the case 100 (e.g., from a fully open position), but the first and second magnet portions 128, 148 may assist with opening the case 100 after reaching the halfway point and may assist with closing the case 100 after reaching the halfway point.

The case 100 may also include a battery 102 and electronics 104 for charging the hearing devices when contained within the case 100. For example, the battery 102 may be disposed in one of the first and second body portions 120, 140 and the electronics 104 may be disposed in the other of the first and second body portions 120, 140. It is noted that while the battery 102 and electronics 104 are described as located within separate body portions, in some embodiments, the battery 102 and the electronics 104 may be located in the same body portion (e.g., the first body portion 120 or the second body portion 140). As shown in FIGS. 2A and 2B, the battery 102 is positioned within the second body portion 140 and the electronics 104 are positioned within the first body portion 120. Each of the battery 102 and the electronics 104 are illustrated using broken lines to depict that the battery 102 and the electronics 104 that are contained within the second body portion 140 and the first body portion 120, respectively. In one or more embodiments, the case 100 may include a heat absorbing material (e.g., foam) proximate one or both of the battery 102 and the electronics 104. For example, the heat absorbing material may be positioned proximate one side of the battery 102 and/or the electronics 104 to assist in increasing the effective heat path from the battery 102 and/or the electronics 104 towards the outer case surface.

The electronics 104 may be implemented, at least in part, in hardware, software, firmware, or any combination thereof. For example, various aspects of the techniques may be implemented within one or more processors, including one or more microprocessors, microcontrollers, DSPs, ASICs, FPGAs, or any other equivalent integrated or discrete logic circuitry, as well as any combinations of such components, or other devices. The term "processor" or "processing circuitry" may generally refer to any of the foregoing logic circuitry, alone or in combination with other logic circuitry, or any other equivalent circuitry. Such hardware, software, and/or firmware may be implemented within the same system or within separate systems to support the various operations and functions described in this disclosure. In addition, any of the described components may be implemented together or separately as discrete but interoperable logic devices.

When implemented in software, the functionality ascribed to the systems, devices and methods described in this disclosure may be embodied as instructions and/or logic on a computer-readable medium such as RAM, ROM, NVRAM, EEPROM, FLASH memory, magnetic data storage media, optical data storage media, or the like. The instructions and/or logic may be executed by one or more processors to support one or more aspects of the functionality described in this disclosure.

The one or more hinges 160 may be adapted or configured to connect the battery 102 and the electronics 104 depending on whether the case 100 is in the closed position or the open position. For example, the one or more hinges 160 may operably connect the battery 102 and the electronics 104 when the case 100 is in the closed position. Further, the one or more hinges 160 may isolate the battery 102 from the electronics 104 when the case 100 is in the open position. As a result, when the case 100 is in the closed position (and when the hearing devices are positioned within the first and second cavities 125, 145), the battery 102 is operably coupled to the electronics 104 such that power is delivered to the hearing devices for charging.

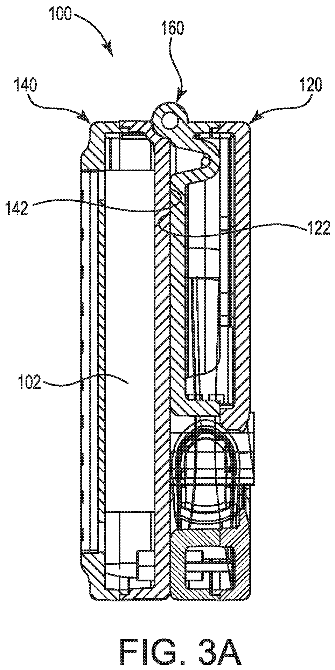

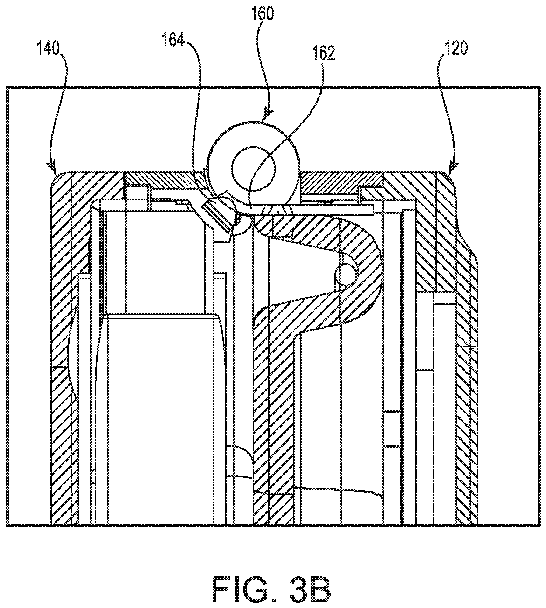

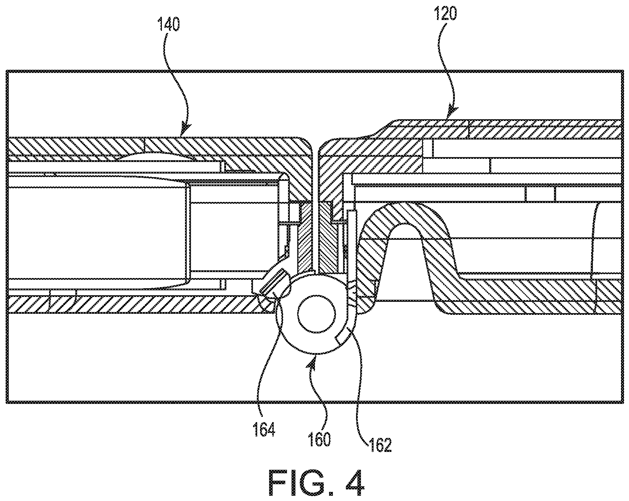

Furthermore, as shown in FIGS. 3-4, the one or more hinges 160 may include one or more contact points so that power is only supplied to the hearing devices when the case 100 is in the closed position (e.g., as shown in FIGS. 3A and 3B). For example, the one or more contact points may include a first contact point 162 that moves along with the first body portion 120 (e.g., attached to the portion of the hinge fixed to the first body portion 120) and a second contact point 164 that moves along with the second body portion 140 (e.g., attached to the portion of the hinge fixed to the second body portion 140). When the case 100 is in the closed position (e.g., as shown in FIGS. 3A and 3B), the one or more contact points are aligned to, e.g., operably couple the battery 102 and the electronics 104, and provide power to the charging contacts 126, 146. Specifically, the first contact point 162 is aligned with the second contact point 164 when the case 100 is in the closed position. When the case 100 is in the open position (e.g., as shown in FIG. 4), the one or more contact points break alignment to, e.g., prevent power from reaching the charging contacts 126, 146. Specifically, the first contact point 162 is not aligned with the second contact point 164 when the case 100 is in the open position. The one or more contact points may be positioned within the one or more hinges 160 to shield the one or more contact points from user and environmental interaction.

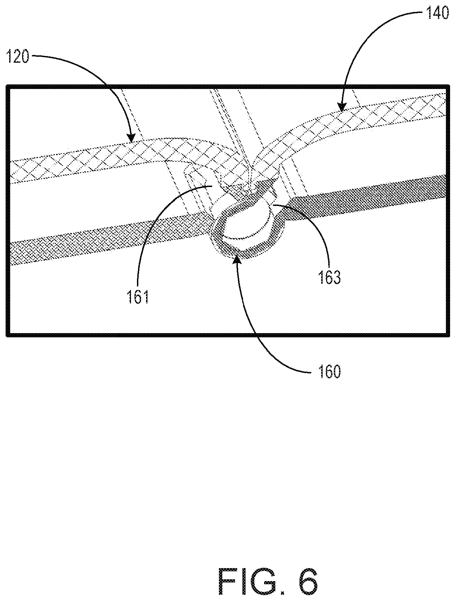

In one or more embodiments, the one or more hinges 160 may define openings to route wire (e.g., insulated wire) between the first and second body portions 120, 140. For example, as illustrated in FIG. 6, the one or more hinges may define a first opening 161 proximate the first body portion 120 and a second opening 163 proximate the second body portion 140. The wire (e.g., carrying electrical current, signals, etc.) passing through the openings 161, 163 between the first and second body portions 120, 140 (e.g., into an internal space of each of the first and second body portions 120, 140) may connect various electrical components (e.g., batteries, circuit boards, etc.). The openings 161, 163 may provide a suitable strain relief to the wire by allowing the wire to freely move without restriction (e.g., such that the wire may be prevented from impingement). Therefore, the electrical connection between the first and second body portions 120, 140 may be unaffected by whether the case 100 is in the open position or the closed position.

The case 100 may also include an interface port 108, as shown in FIGS. 1A, 1B, and 2B. The interface port 108 may be adapted to receive a connector (e.g., cable) to provide electronic communication with the battery 102 and the electronics 104. For example, a charging cable may be received by the interface port 108 to charge the battery 102 located within the case 100. In one or more embodiments, a connector may be inserted into the interface port 108 to draw power from the battery 102 within the case 100. The case 100 may include any number of interface ports 108. The interface ports 108 may be positioned at any suitable location on the case 100. For example, as shown in FIGS. 1-2, the interface port 108 is located on the top side 132 of the first body portion 120 (e.g., the same side as the electronics 104). Positioning the interface port 108 on the first body portion 120 with the electronics 104 allows the interface port 108 to directly communicate with the electronics 104. In other embodiments, the interface port 108 may be located on the same body portion as the battery 102 (e.g., if the interface port 108 is configured to draw power from the battery 102). In one or more embodiments, the case 100 may include a rib or stop to prevent the interface port 108 from being rotated or torqued off the PCB solder pad mounts by a force applied to the interface port 108 through, e.g., a cable attached thereto.

In one or more embodiments, the case 100 may include indicator lights 180 to provide a visual indicator regarding the status of components within the case 100. For example, the indicator lights 180 may communicate the power level/status of the hearing devices or the battery 102 contained within the case 100. The indicator lights 180 may be located anywhere on the case 100 (e.g., the first body portion 120, the second body portion 140, top sides 132, 152, hinge sides 134, 154, bottom sides 136, 156, latch sides 138, 158). As shown in FIGS. 1B and 2B, the indicator lights 180 are located on the latch side 138 (e.g., opposite the hinge side 134) of the first body portion 120. Further, the indicator lights 180 may be aligned to correspond with the component for which indicator light 180 tracks the status. For example, as shown in FIG. 2B, the indicator lights 180 closer to the top side 132 may correspond to the hearing device in the second body portion 140 and the indicator lights 180 closer to the bottom side 136 may correspond to the hearing device in the first body portion 120. In one or more embodiments, the case 100 may include indicator lights on the hinge side 134, 154 (of the first or second body portion 120, 140) to indicate the state of charge of the battery 102.

In some embodiments, the case 100 may include a solar element 110 as shown in FIG. 1A. The solar element 110 may collect solar rays to charge the battery 102 located within the case 100. The solar element 110 may be located on any suitable portion of the case 100 (e.g., the first body portion 120, the second body portion 140, etc.). For example, as shown in FIG. 1A, the solar element 110 is located on the outer surface 124 of the first body portion 120.

Additionally, the case 100 may include an inductive charging element (not shown). The inductive charging element may be used to charge the battery 102 (e.g., using an inductive coil) located within the case 100. The inductive charging element may be located on any suitable portion of the case 100 (e.g., the first body portion 120, the second body portion 140, etc.).

## Claims

1. A case (100) configurable in an open position and a closed position, the case (100) comprising:
a first body portion (120) comprising an inner surface, wherein the inner surface of the first body portion (120) defines a first cavity (125) extending into the first body portion (120) to receive a first hearing device in the open position; and
a second body portion (140) movably coupled to the first body portion (120) and comprising an inner surface, wherein the inner surface of the second body portion (140) defines a second cavity (145) extending into the second body portion (140) to receive a second hearing device in the open position,
wherein the first body portion (120) retains the second hearing device and the second body portion (140) retains the first hearing device in the closed position, and
wherein the first hearing device is completely contained within the first body portion (120) when received by the first body portion (120) and the second hearing device is completely contained within the second body portion (140) when received by the second body portion.

2. The case (100) of claim 1, further comprising one or more hinges operably coupling the first and second body portions such that the first and second body portions move relative to one another.

3. The case (100) of claim 2, wherein the first and second body portions move relative to one another between an open position and a closed position of the case (100), and wherein the one or more hinges comprise a biasing element configured to bias the case (100) in the open position and the closed position.

4. The case (100) of claim 3, wherein the biasing element comprises a first magnet portion positioned in the one or more hinges of the first body portion (120) and a second magnet portion positioned in the one or more hinges of the second body portion, wherein the first and second magnet portions are configured to be in equilibrium with one another only when positioned at 0 degrees and 180 degrees relative to one another.

5. The case (100) as in any one of claims 3-4, wherein the one or more hinges define a first opening proximate the first body portion (120) and a second opening proximate the second body portion, wherein the case (100) further comprises a wire extending between the first and second body portions through the first and second openings of the one or more hinges.

6. The case (100) as in any preceding claim, further comprising
a battery disposed in one of the first and second body portions; and
electronics disposed in the other of the first and second body portions.

7. The case (100) as in any preceding claim, wherein each of the first and second body portions comprises an outer surface opposing the inner surface, wherein the outer surface of each of the first and second body portions defines an opening extending through the outer surface to the first and second cavity, respectively, and/or optionally, wherein the first body portion (120) comprises a
first charging contact located within the first cavity (125) and the second body portion (140) comprises a
second charging contact located within the second cavity (145), and/or optionally, wherein one of the first and second body portion comprises an interface port adapted to receive a connector.

8. The case (100) as in any preceding claim, wherein the inner surface of the first body portion (120) faces and is parallel with the inner surface of the second body portion (140) when the case is in the closed position, and/or optionally, wherein the first cavity (125) is offset from the second cavity (145) when the case (100) is in the closed position.

9. A system comprising the case (100) of any of claims 1 to 8, further comprising:
the first hearing device received by the first cavity (125) of the first body portion (120) in the open position; and
the second hearing device received by the second cavity (145) of the second body portion (140) in the open position.

## Patentansprüche

1. Gehäuse (100), das in einer offenen Position und einer geschlossenen Position konfigurierbar ist, wobei das Gehäuse (100) umfasst:
einen ersten Körperabschnitt (120), der eine Innenoberfläche umfasst, wobei die Innenoberfläche des ersten Körperabschnitts (120) einen ersten Hohlraum (125) definiert, der sich in den ersten Körperabschnitt (120) erstreckt, um eine erste Hörvorrichtung in der offenen Position aufzunehmen; und
einen zweiten Körperabschnitt (140), der beweglich mit dem ersten Körperabschnitt (120) gekoppelt ist und eine Innenoberfläche umfasst, wobei die Innenoberfläche des zweiten Körperabschnitts (140) einen zweiten Hohlraum (145) definiert, der sich in den zweiten Körperabschnitt (140) erstreckt, um eine zweite Hörvorrichtung in der offenen Position aufzunehmen,
wobei der erste Körperabschnitt (120) die zweite Hörvorrichtung und der zweite Körperabschnitt (140) die erste Hörvorrichtung in der geschlossenen Position hält, und
wobei die erste Hörvorrichtung vollständig in dem ersten Körperabschnitt (120) enthalten ist, wenn sie von dem ersten Körperabschnitt (120) aufgenommen wird, und die zweite Hörvorrichtung vollständig in dem zweiten Körperabschnitt (140) enthalten ist, wenn sie von dem zweiten Körperabschnitt aufgenommen wird.

2. Gehäuse (100) nach Anspruch 1, weiter umfassend ein oder mehrere Scharniere, die den ersten und den zweiten Körperabschnitt betriebsfähig koppeln, sodass sich der erste und der zweite Körperabschnitt in Bezug zueinander bewegen.

3. Gehäuse (100) nach Anspruch 2, wobei sich der erste und der zweite Körperabschnitt in Bezug zueinander zwischen einer offenen Position und einer geschlossenen Position des Gehäuses (100) bewegen, und wobei das eine oder die mehreren Scharniere ein Vorspannelement umfassen, das konfiguriert ist, um das Gehäuse (100) in der offenen Position und der geschlossenen Position vorzuspannen.

4. Gehäuse (100) nach Anspruch 3, wobei das Vorspannelement einen ersten Magnetabschnitt, der in dem einen oder den mehreren Scharnieren des ersten Körperabschnitts (120) positioniert ist, und einen zweiten Magnetabschnitt, der in dem einen oder den mehreren Scharnieren des zweiten Körperabschnitts positioniert ist, umfasst, wobei der erste und der zweite Magnetabschnitt konfiguriert sind, um nur dann im Gleichgewicht miteinander zu sein, wenn sie in 0 Grad und 180 Grad in Bezug zueinander positioniert sind.

5. Gehäuse (100) nach einem der Ansprüche 3-4, wobei das eine oder die mehreren Scharniere eine erste Öffnung in der Nähe des ersten Körperabschnitts (120) und eine zweite Öffnung in der Nähe des zweiten Körperabschnitts definieren, wobei das Gehäuse (100) weiter einen Draht umfasst, der sich zwischen dem ersten und dem zweiten Körperabschnitt durch die erste und die zweite Öffnung des einen oder der mehreren Scharniere erstreckt.

6. Gehäuse (100) nach einem vorstehenden Anspruch, weiter umfassend
eine Batterie, die in einem des ersten und des zweiten Körperabschnitts angeordnet ist; und
Elektronik, die in dem anderen des ersten und des zweiten Körperabschnitts angeordnet ist.

7. Gehäuse (100) nach einem vorstehenden Anspruch, wobei jeder des ersten und des zweiten Körperabschnitts eine Außenoberfläche gegenüber der Innenoberfläche umfasst, wobei die Außenoberfläche von jedem des ersten und des zweiten Körperabschnitts eine Öffnung definiert, die sich durch die Außenoberfläche zu dem ersten bzw. dem zweiten Hohlraum erstreckt, und/oder optional, wobei der erste Körperabschnitt (120) einen ersten Ladekontakt umfasst, der sich innerhalb des ersten Hohlraums (125) befindet, und der zweite Körperabschnitt (140) einen zweiten Ladekontakt umfasst, der sich innerhalb des zweiten Hohlraums (145) befindet, und/oder optional, wobei einer des ersten und des zweiten Körperabschnitts einen Schnittstellenanschluss umfasst, der angepasst ist, um einen Steckverbinder aufzunehmen.

8. Gehäuse (100) nach einem vorstehenden Anspruch, wobei die Innenoberfläche des ersten Körperabschnitts (120) der Innenoberfläche des zweiten Körperabschnitts (140) zugewandt und parallel zu dieser ist, wenn das Gehäuse in der geschlossenen Position ist, und/oder optional, wobei der erste Hohlraum (125) von dem zweiten Hohlraum (145) versetzt ist, wenn das Gehäuse (100) in der geschlossenen Position ist.

9. System, das das Gehäuse (100) nach einem der Ansprüche 1 bis 8 umfasst, weiter umfassend:
die erste Hörvorrichtung, die von dem ersten Hohlraum (125) des ersten Körperabschnitts (120) in der offenen Position aufgenommen wird; und
die zweite Hörvorrichtung, die von dem zweiten Hohlraum (145) des zweiten Körperabschnitts (140) in der offenen Position aufgenommen wird.

## Revendications

1. Boîtier (100) configurable dans une position ouverte et une position fermée, le boîtier (100) comprenant :
une première partie de corps (120) comprenant une surface interne, dans lequel la surface interne de la première partie de corps (120) définit une première cavité (125) s'étendant dans la première partie de corps (120) pour recevoir un premier dispositif auditif en position ouverte ; et
une seconde partie de corps (140) couplée de manière mobile à la première partie de corps (120) et comprenant une surface interne, dans lequel la surface interne de la seconde partie de corps (140) définit une seconde cavité (145) s'étendant dans la seconde partie de corps (140) pour recevoir un second dispositif auditif en position ouverte,
dans lequel la première partie de corps (120) retient le second dispositif auditif et la seconde partie de corps (140) retient le premier dispositif auditif en position fermée, et
dans lequel le premier dispositif auditif est entièrement contenu dans la première partie de corps (120) lorsqu'il est reçu par la première partie de corps (120) et le second dispositif auditif est entièrement contenu dans la seconde partie de corps (140) lorsqu'il est reçu par la seconde partie de corps.

2. Boîtier (100) selon la revendication 1, comprenant en outre une ou plusieurs charnières couplant fonctionnellement les première et seconde parties de corps de telle sorte que les première et seconde parties de corps se déplacent l'une par rapport à l'autre.

3. Boîtier (100) selon la revendication 2, dans lequel les première et seconde parties de corps se déplacent l'une par rapport à l'autre entre une position ouverte et une position fermée du boîtier (100), et dans lequel les une ou plusieurs charnières comprennent un élément de sollicitation configuré pour solliciter le boîtier (100) en position ouverte et en position fermée.

4. Boîtier (100) selon la revendication 3, dans lequel l'élément de sollicitation comprend une première partie magnétique positionnée dans les une ou plusieurs charnières de la première partie de corps (120) et une seconde partie magnétique positionnée dans les une ou plusieurs charnières de la seconde partie de corps, dans lequel les première et seconde parties magnétiques sont configurées pour être en équilibre l'une avec l'autre uniquement lorsqu'elles sont positionnées à 0 degré et 180 degrés l'une par rapport à l'autre.

5. Boîtier (100) selon l'une quelconque des revendications 3-4, dans lequel les une ou plusieurs charnières définissent une première ouverture à proximité de la première partie de corps (120) et une seconde ouverture à proximité de la seconde partie de corps, dans lequel le boîtier (100) comprend en outre un fil s'étendant entre les première et seconde parties de corps à travers les première et seconde ouvertures des une ou plusieurs charnières.

6. Boîtier (100) selon une quelconque revendication précédente, comprenant en outre
une batterie disposée dans l'une des première et seconde parties de corps ; et
des composants électroniques disposés dans l'autre des première et seconde parties de corps.

7. Boîtier (100) selon une quelconque revendication précédente, dans lequel chacune des première et seconde parties de corps comprend une surface externe opposée à la surface interne, dans lequel la surface externe de chacune des première et seconde parties de corps définit une ouverture s'étendant à travers la surface externe jusqu'aux première et seconde cavités, respectivement et/ou facultativement, dans lequel la première partie de corps (120) comprend un premier contact de charge situé à l'intérieur de la première cavité (125) et la seconde partie de corps (140) comprend un second contact de charge situé à l'intérieur de la seconde cavité (145), et/ou facultativement, dans lequel l'une des première et seconde parties de corps comprend un port d'interface conçu pour recevoir un connecteur.

8. Boîtier (100) selon une quelconque revendication précédente, dans lequel la surface interne de la première partie de corps (120) fait face et est parallèle à la surface interne de la seconde partie de corps (140) lorsque le boîtier est en position fermée, et/ou facultativement, dans lequel la première cavité (125) est décalée par rapport à la seconde cavité (145) lorsque le boîtier (100) est en position fermée.

9. Système comprenant le boîtier (100) selon l'une quelconque des revendications 1 à 8, comprenant en outre :
le premier dispositif auditif reçu par la première cavité (125) de la première partie de corps (120) en position ouverte ; et
le second dispositif auditif reçu par la seconde cavité (145) de la seconde partie de corps (140) en position ouverte.
